(19) Europäisches Patentamt
European Patent Office
Office européen des brevets

(11) **EP 1 879 758 B1**

(12) **EUROPÄISCHE PATENTSCHRIFT**

(45) Veröffentlichungstag und Bekanntmachung des Hinweises auf die Patenterteilung:
**17.09.2008  Patentblatt 2008/38**

(21) Anmeldenummer: **06724167.9**

(22) Anmeldetag: **08.04.2006**

(51) Int Cl.:
*B60G 17/015* ^(2006.01)    *B60G 21/055* ^(2006.01)
*B60G 17/016* ^(2006.01)

(86) Internationale Anmeldenummer:
**PCT/EP2006/003230**

(87) Internationale Veröffentlichungsnummer:
**WO 2006/119833 (16.11.2006 Gazette 2006/46)**

(54) **GETEILTER ELEKTROMECHANISCHER KRAFTFAHRZEUGSTABILISATOR MIT BLOCKIEREINRICHTUNG UND VERFAHREN ZUR WANKSTABILISIERUNG BEI AUSFALL ODER ABSCHALTUNG DES AKTIVEN KRAFTFAHRZEUGSTABILISATORS**

SPLIT ELECTROMECHANICAL MOTOR VEHICLE STABILISER WITH LOCKING DEVICE AND METHOD FOR ROLL STABILISATION WHEN THE ACTIVE MOTOR VEHICLE STABILISER FAILS OR IS SWITCHED OFF

STABILISATEUR ELECTROMECANIQUE EN PLUSIEURS PARTIES DE VEHICULE AUTOMOBILE DOTE D'UN DISPOSITIF DE BLOCAGE ET PROCEDE ANTIROULIS EN CAS DE DEFAILLANCE OU DE MISE HORS CIRCUIT DU STABILISATEUR ACTIF

(84) Benannte Vertragsstaaten:
**DE FR GB IT**

(30) Priorität: **11.05.2005  DE 102005021673**

(43) Veröffentlichungstag der Anmeldung:
**23.01.2008  Patentblatt 2008/04**

(73) Patentinhaber: **Bayerische Motorenwerke Aktiengesellschaft**
**80809 München (DE)**

(72) Erfinder:
• **ANDERTEN, Timo**
**80935 München (DE)**
• **MEITINGER, Thomas**
**80798 München (DE)**

(56) Entgegenhaltungen:
**EP-A- 1 426 208        EP-A- 1 491 371**
**WO-A-03/009445        WO-A-20/04010555**
**WO-A-20/04037573      DE-A1- 10 357 853**

## Beschreibung

Die Erfindung betrifft einen geteilten elektromechanischen Kraftfahrzeugstabilisator mit einer Blockiereinrichtung zur Wankstabilisierung nach dem Oberbegriff des ersten Anspruchs.

Es ist bereits bekannt, einen Kraftfahrzeugstabilisator in ein erstes, der Aufhängung des linken Rades einer Fahrzeug-Achse zugeordnetes Stabilisatorteil und in ein zweites, der Aufhängung des rechten Rades dieser Fahr-zeug-Achse zugeordnetes Stabilisatorteil zu unterteilen. Sind diese Stabilisatorteile um deren gemeinsame Längsachse gegeneinander verdrehbar, kann gegenüber Fahrwerken mit konventionellem Stabilisator eine deutlich gesteigerte Wankabstützung erreicht werden, wenn die beiden Stabilisatorteile durch einen dazwischen angebrachten Aktuator, aufgrund einer geeigneten Ansteuerung, bedarfsgerecht gegeneinander verdreht werden.

Ein für diese Anwendung geeigneter elektromechanischer Aktuator umfasst einen Elektromotor und ein mechanisches Getriebe. Damit erhält man einen Stabilisator, dessen beide Stabilisatorhälften durch den elektromechanischen Aktuator gezielt zueinander verdreht werden können, damit ein gewünschtes Stabilisatormoment erzeugt wird, welches dann das Wanken des Fahrzeugaufbaus verhindert.

Die DE 198 46 275 A1 beschreibt einen solchen geteilten Stabilisator mit eingebautem elektrischem Schwenkmotor zur Wankregelung. Durch diesen kann über die als passive Torsionsfedern ausgebildeten Stabilisatorteile eine Vorspannung und damit ein Stabilisierungsmoment in den Fahrzeugaufbau eingeleitet werden, welches einer Wankbewegung entgegenwirkt.

Um die Stabilisatorteile zur Wankregelung vorspannen zu können, muss der Schwenkmotor aktiv ein definiertes Moment aufbringen und so einen bestimmten Verdrehwinkel zwischen den beiden Stabilisatorteilen einstellen können. Entsprechend der Größe der Wankbewegung muss die Größe des aufzubringenden Moments gewählt werden.

Bei einem Ausfall der Wankregelung, zum Beispiel durch einen Ausfall der Energieversorgung oder bedingt durch einen Fehler an einer Systemkomponente, kann der Aktuator das geforderte Moment nicht mehr aktiv aufbauen, was ohne weitere Maßnahmen dazu führt, dass die beiden Stabilisatorteile ihre Wirkung verlieren, da Rotor und Stator des Elektromotors leicht gegeneinander verdrehbar sind.

Um diese unerwünschte Verdrehung zu unterbinden, besitzt der Schwenkmotor in DE 198 46 275 A1 eine Bremse, die bei einem Fehler im System als Blockiereinrichtung zwischen den beiden Stabilisatorteilen wirkt. Die Stabilisatorteile wirken nun wie ein passiver Stabilisator, der einen Wankwinkel zulässt, der zwar vom Wankwinkel im aktiv stabilisierten Zustand abweicht, aber dennoch eine Weiterfahrt ermöglicht.

Wird allerdings bei Kurvenfahrt durch den Einsatz der Bremse von der aktiven Wankregelung in die passive Wankstabilisierung übergegangen und der Schwenkmotor blockiert, während dieser die Stabilisatorteile gegeneinander vorgespannt hat, so wird das Fahrzeug am Ende der Kurve mit einem um die Fahrzeuglängsachse verdrehten Fahrzeugaufbau weiterfahren.

Dies wird in der gattungsbildenden WO 2004/010555 A2 dadurch verhindert, dass der Aktuator durch einen eingebauten Energiespeicher im Versagensfall in die Lage versetzt wird, einen Kolben in eine dafür vorgesehene erste Position zu fahren und dadurch die beiden Stabilisatorteile in eine Versagensfallstellung zu bringen. Der Energiespeicher kann geladen werden, wenn der Kolben zu Beginn des ordentlichen Betriebs von der ersten, in seine zweite Position, die Betriebsposition gebracht wird.

Des weiteren beschreibt WO 2004/037573 A1 einen Wankstabilisator mit einem zwischen zwei Stabilisatorhälften angebrachten Aktuator mit einer Blockiereinrichtung für den Versagensfall, die bedarfsweise die beiden Stabilisatorhälften drehfest miteinander in mehreren verschiedenen Positionen verbinden kann, um im Versagensfall die Blockierung möglichst schnell, ohne große Verdrehwinkel zwischen den Stabilisatorhälften zu bewirken. Der Blockierbolzen bewegt sich hier im Aktuator in radialer Richtung. Auch hier kann bei Kurvenfahrt durch den Einsatz der Blockiereinrichtung bewirkt werden, dass das Fahrzeug am Ende der Kurve mit einem um die Fahrzeuglängsachse verdrehten Fahrzeugaufbau weiterfahren muss.

Aufgabe der Erfindung ist es, einen geteilten Kraftfahrzeugstabilisator zur Wankstabilisierung für ein Kraftfahrzeug bereitzustellen, bei dem im Fall eines Ausfalls der Wankregelung eine Weiterfahrt mit einem eventuell verdrehten Fahrzeugaufbau vermieden wird, indem ein mechanisch funktionierender Notbetrieb des Stabilisators möglich ist, dessen Einsatz positionsbestimmt antriebsseitig über mehrere Umdrehungen des Aktuators erfolgt und der nicht die abtriebsseitige hohe Last, sondern die geringere Getriebeeingangslast aufnehmen muss.

Die Aufgabe wird durch die Merkmale des ersten Anspruchs gelöst. Bevorzugte Ausgestaltungen der Erfindung beschreiben die abhängigen Ansprüche.

Nach der Erfindung ist ein zur Wankregelung geteilter Kraftfahrzeugstabilisator, mit einem eingebauten elektromechanischen Aktuator zum Verspannen zweier Stabilisatorteile gegeneinander, der mindestens aus einem Elektromotor, aus einem Getriebe und aus einer Blockiereinrichtung besteht, über die ein Gehäuse des Aktuators an einem Rotor des Elektromotors festlegbar ist, wobei das Gehäuse mit dem einen Stabilisatorteil und eine Getriebeausgangswelle mit dem anderen Stabilisatorteil zur Drehmomentübertragung verbunden sind und die Blockiereinrichtung aus einem in Axialrichtung verschiebbaren Blockierbolzen besteht, dadurch gekennzeichnet, dass das Gehäuse und der Rotor nur in einer einzigen Position zueinander, der Festlegeposition, nach der Auslösung der Blockiereinrichtung festgelegt werden und dass die Festlegeposition die Grundstellung der beiden Stabilisatorhälften ist, in der diese nicht gegeneinander vorgespannt sind, wozu der Blockierbolzen in Umfangsrichtung gehäuse- bzw. rotor- oder getriebeausgangswellenfest angebracht ist und mindestens ein Formschlussprofil besitzt, das durch das Verschieben des Blockierbolzens in die Festlegeposition mit einem rotor- oder getriebeausgangswellen- bzw. gehäusefesten Gegenprofil eine in Umfangsrichtung blockierend wirkende formschlüssige Verbindung bildet.

Das hat den Vorteil, dass beim Abschalten oder nach Ausfall der Wankregelung die Drehbewegung der beiden Stabilisatorteile gegeneinander nur in einer Stellung blockiert werden kann, die der Stellung auf ebenem Untergrund bei Geradeausfahrt entspricht. Dadurch wird vorteilhafterweise sichergestellt, dass das Fahrzeug am Ende einer Kurve nicht mit einem um die Fahrzeuglängsachse verdrehten Fahrzeugaufbau weiterfahren muss, wenn in der Kurve die Wankregelung ausfällt. Denn der Fahrzeugaufbau kann sich, bevor die Blockierung einsetzt, durch die Vorspannung der Aufbaufedern wieder in die Waagrechte begeben.

Trotzdem ist, bei besonders einfachem Aufbau der Blockiereinrichtung, eine vollständig mechanische, formschlüssige Blockierung möglich, als Ausfallsicherung in einem Getriebe, das im oszillierenden Betrieb mit begrenzten absoluten Umdrehungen eingesetzt werden kann, um den Ausfall-Modus in einer definierten waagrechten Position des Fahrzeugaufbaus einsetzen zu lassen. Vorteilhafterweise wird eine formschlüssige Verbindung von Getriebeeingangswelle und Gehäuse im Falle des Ausfall-Modus-Betriebs geschaffen, die positionsabhängig zustande kommt. Die Information, wo die definierte Position des mechanischen Einrastens gegeben ist, wird durch die Überlagerung von mehreren, hier zwei, mechanischen Positionssignalen erreicht.

Bei einer vorteilhaften Ausführung der Erfindung umfasst die Blockiereinrichtung einen Elektromagneten, der den Blockierbolzen gegen die Vorspannkraft einer Feder in nicht blockierender Position oder in Festlegeposition hält. Dadurch kann alternativ bei der Auslegung der Blockiereinrichtung gewählt werden, ob diese im Ausfallzustand stromlos oder bestromt einsetzen soll.

Bei einer bevorzugten Ausführung der Erfindung ist die Blockiereinrichtung dadurch gekennzeichnet, dass der Blockierbolzen mindestens drei Formschlussprofile aufweist, ein erstes, dessen Gegenprofil an der Getriebeausgangswelle ausgebildet ist, ein zweites, dessen Gegenprofil am Rotor ausgebildet ist und ein drittes, dessen Gegenprofil am Gehäuse ausgebildet ist.

Dabei ist bei einer besonders bevorzugten und einfachen Ausführung der Erfindung eines der drei Formschlussprofile mit seinem Gegenprofil zur Festlegung des Blockierbolzens in Umfangsrichtung und seiner axialen Führung immer in Eingriff. Und die beiden anderen Formschlussprofile sind mit ihrem Gegenprofil nur dann in Eingriff, wenn die Blockiereinrichtung die beiden Stabilisatorteile in der Festlegeposition festlegt.

Ein besonders vorteilhaftes Verfahren zur Wankregelung an einer Vorder und/oder Hinterachse eines Kraftfahrzeugs mit einem geteilten Stabilisator, bei dem ein elektromechanischer Aktuator Wankbewegungen des Fahrzeugaufbaus gegenüber dem Fahrwerk durch Verspannen der beiden Stabilisatorteile gegeneinander in beide Drehrichtungen des elektromechanischen Aktuators so ausgleicht, dass der Fahrzeugaufbau möglichst parallel einer Horizontalebene gehalten wird bewirkt, dass nach einem Abschalten oder bei einem Ausfall des elektromechanischen Aktuators, Wankbewegungen des Fahrzeugaufbaus gegenüber dem Fahrwerk dadurch beeinflußt werden, dass die beiden Stabilisatorteile durch eine Blockiereinrichtung in ihrer Grundstellung, der Festlegeposition, miteinander verbunden werden. Befindet sich sowohl an der Vorderachse, als auch an der Hinterachse des Kraftfahrzeugs ein elektromechanischer Aktuator, kann auch durch ein ausschließliches Blockieren der Stabilisatorteile der Vorderachse die Fahrstabilität erhöht werden, da dadurch ein untersteuerndes Fahrverhalten erreicht wird. Wenn ausschließlich eine solche Beeinflussung des Fahrverhaltens erwünscht ist, kann das Kraftfahrzeug auch mit geteilten Stabilisatoren versehen sein, von denen ausschließlich der Aktuator für die Vorderachse mit einer Blockiereinrichtung versehen ist.

Zwei bevorzugte Ausführungsbeispiele der Erfindung sind in der nachfolgenden Beschreibung und der zugehörigen Zeichnung näher dargestellt. Es zeigen:

Figur 1: einen teilweise und schematisch vom Wirkprinzip her dargestellten elektromechanischen Aktuator gemäß der Erfindung, für einen nicht dargestellten aktiven Kraftfahrzeugstabilisator,

Figur 2: den elektromechanischen Aktuator gemäß Figur 1, in teilweiser Darstellung im Längs- und Querschnitt,

Figur 3: eine weitere Ausführungsform eines elektromechanischen Aktuators gemäß der Erfindung, ebenfalls teilweise und schematisch vom Wirkprinzip her dargestellt, für einen nicht dargestellten aktiven Kraftfahrzeugstabilisator und

Figur 4: den elektromechanischen Aktuator gemäß Figur 3 in teilweiser Darstellung im Längs- und Querschnitt.

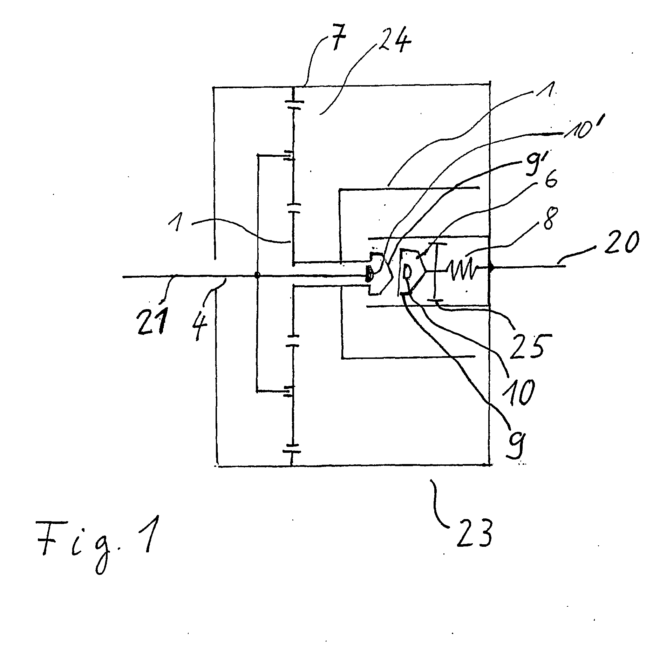

Figur 1 zeigt einen aktiven Stabilisator, von dem nur die Enden zweier Stabilisatorteile 20, 21 dargestellt sind, die durch einen elektromechanischen Aktuator 23 miteinander verbunden und gegeneinander vorspannbar sind. Dieser umfasst einen nicht dargestellten Elektromotor als Einrichtung zur Drehmomenterzeugung und ein mechanisches Getriebe 24 als Einrichtung zur Drehmomentabgabe an die Stabilisatorteile 20, 21. Die gewählte Getriebeübersetzung des Getriebes 24 ist konstant. Der Aktuator 23 besitzt ein Gehäuse 7, das mit dem Stabilisatorteil 20 verbunden ist. Der Stator des Elektromotors ist im Gehäuse 7 befestigt und überträgt bei Betrieb des Elektromotors ein Drehmoment über seinen Rotor 1 auf das mechanische Getriebe 24 und weiter auf das Stabilisatorteil 21, wodurch sich die beiden Stabilisatorteile 20, 21 gegeneinander verspannen. Bruchteile der Stabilisatorteile 20, 21 sind in der Figur gezeigt, woraus hervorgeht, dass die Stabilisatorteile 20, 21 im Bereich der Befestigung koaxial zum Aktuator 23 angeordnet sind. Die Drehmomentübertragung auf die Stabilisatorteile 20, 21 erfolgt zum Beispiel über geeignete, nicht gezeichnete Wellen-Nabenverbindungen.

Am nicht gezeichneten Kraftfahrzeug sind nicht gezeichnete Befestigungselemente nach dem Stand der Technik vorgesehen, für jedes Stabilisatorteil 20, 21 jeweils ein Traglager und an den nicht gezeichneten Stabilisatorteilenden eine Kraftübertragungseinrichtung zur nicht gezeichneten Radaufhängung.

Die Dynamik des Gesamtsystems wird dabei maßgeblich durch die Getriebeübersetzung, die Massenträgheit des Systems, den Elektromotor und die Torsionssteifigkeit der beiden Stabilisatorteile 20, 21 beeinflusst.

Nach der Erfindung kann nun der Elektromotor zur Wankregelung die beiden Stabilisatorteile 20, 21 gegeneinander verspannen, indem dieser bestromt wird. Es findet ein dem Stand der Technik zugehöriger, regelbarer und umschaltbarer Elektromotor Verwendung, damit die Stabilisatorteile 20, 21 mit unterschiedlichem Drehmoment beider Drehrichtungen gegeneinander verspannt werden können.

Ein Blockieren der beiden Stabilisatorteile 20, 21 gegeneinander erfolgt immer nach einem Abschalten oder bei einem Ausfall der Wankregelung. Dann werden Wankbewegungen des Fahrzeugaufbaus gegenüber dem Fahrwerk dadurch beeinflußt, dass die beiden Stabilisatorteile 20, 21 tordieren, ohne dass ein Ausgleich der Wankbewegungen durch den Aktuator 23 der Wankregelung stattfindet. So kann, trotz Ausfall oder nach Abschalten der Wankregelung, bei Kurvenfahrt noch eine Wankstabilisierung erreicht werden, durch die der Wankwinkel verringert wird. Bei blockiertem Aktuator an der Vorderachse und nicht blockiertem Aktuator an der Hinterachse wird eine gierstabile Kurvenfahrt erreicht.

Eine Blockiereinrichtung lässt das mechanische Verbinden der beiden Stabilisatorteile 20, 21, nur in einer bestimmten Position zueinander stehend, in der Festlegestellung zu, so dass sich der Fahrzeugaufbau, zum Beispiel nach einem Ausfall der Wankregelung bei Kurvenfahrt, vor dem Eingriff der Blockiereinrichtung erst in die Grundstellung der beiden Stabilisatorteile 20, 21, in der diese nicht gegeneinander vorgespannt sind, ausrichten muss, sobald das Fahrzeug wieder geradeaus fährt. Erst dann wird durch die Blockiereinrichtung das Gehäuse 7 des Aktuators 23 an dem Rotor 1 des Elektromotors festgelegt, wobei das Gehäuse 7 mit dem einen Stabilisatorteil 20 und eine Getriebeausgangswelle 4 mit dem anderen Stabilisatorteil 21 zur Drehmomentübertragung verbunden sind.

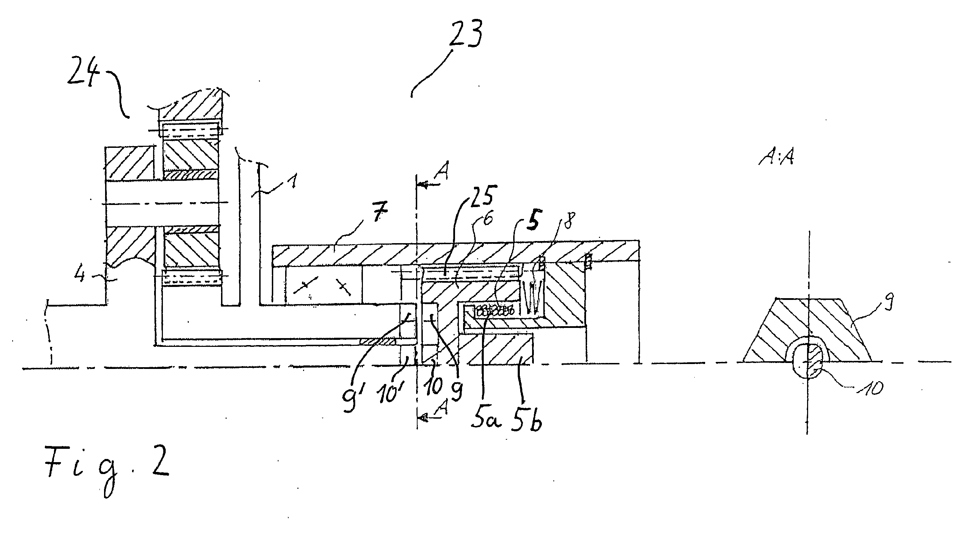

Die Blockiereinrichtung besteht aus einem verschiebbaren Blockierbolzen 6, der am Gehäuse 7 über eine immer in Eingriff befindliche Keilverzahnung 25 in Umfangsrichtung fest und in Axialrichtung verschieblich festgelegt ist und der durch sein Verschieben in die Festlegeposition eine in Umfangsrichtung blockierend wirkende formschlüssige Verbindung mit dem Rotor 1 bildet. Ein bestromter Elektromagnet 5 (Figur 2) hält zur Wankregelung den Blockierbolzen 6 gegen die Vorspannkraft einer Feder 8 in nicht blockierender Position. Fällt die Wankregelung aus, wird der Elektromagnet 5 stromlos und die Feder 8 schiebt den Blockierbolzen 6 dann zur Herstellung der formschlüssigen Verbindung mit dem Rotor 1, wenn ein erstes Formschlussprofil 10 am Blockierbolzen 6, dessen Gegenprofil 10' an der Getriebeausgangswelle 4 ausgebildet ist und ein zweites Formschlussprofil 9 am Blockierbolzen 6, dessen Gegenprofil 9' am Rotor 1 ausgebildet ist, mit dem jeweiligen Gegenprofil 9', 10' in Eingriff kommen kann. Dies ist dann möglich, wenn sich die beiden Stabilisatorteile 20, 21 in der Festlegeposition, das heißt, in ihrer nicht zueinander verspannten Grundstellung befinden und damit der Fahrzeugaufbau parallel einer Horizontalebene gehalten wird.

Eine solche Blockiereinrichtung lässt sich sehr einfach mit einem mechanischen Getriebe 24, das als Planetengetriebe ausgeführt ist, realisieren, bei dem die Getriebeeingangswelle, was hier dem Rotor 1 entspricht, und die Getriebeausgangswelle 4 koaxial sind. Aber auch bei Vorgelegegetrieben ist dieses Prinzip realisierbar.

Im normalen Betriebsmodus, also bei in Betrieb befindlicher Wankregelung, wird der Blockierbolzen 6 durch den Elektromagneten 5 aus Spule 5a und Tauchanker 5b (Figur 2) in der den Aktuator 23 freigebenden Position gehalten. Bei Stromausfall wird der Blockierbolzen 6 mit dem ersten Formschlussprofil 10 und dem zweiten Formschlussprofil 9 durch die Feder 8 gegen deren Gegenprofile 9' am Rotor 1 und 10' an der Getriebeausgangswelle 4 gedrückt. Nur wenn beide Gegenprofile 9', 10' in die Formschlussprofile 9, 10 einrasten können, wird über die formschlüssige Verbindung der Profile 9, 9' das Getriebe 24 blockiert. Durch die Getriebeübersetzung wird das erforderliche Blockiermoment entsprechend vermindert. Das nur als Positionssignal der Getriebeausgangswelle 4 dienende Gegenprofil 10' ist über eine Verlängerung durch die als Hohlwelle ausgeführte Getriebeeingangswelle, den Rotor 1, geführt und an der Getriebeausgangswelle 4 befestigt. Da hier keine Drehmomentübertragung stattfindet, lässt sich die Verlängerung entsprechend dünn ausführen und das Gegenprofil 10' ebenfalls klein dimensionieren, so dass sich hier eine nur alle 360 Winkelgrad wiederkehrende Übereinstimmung mit dem Formschlussprofil 10 erreichen lässt. Der Querschnitt in Figur 2 zeigt hier eine halbkreisförmige Vertiefung im Formschlussprofil 10. Beim Drehmoment übertragenden Formschlussprofil 9 ist die Kontur hingegen der Belastungskraft angepasst auszuführen. Es wird eine Sechskantform für das Formschlussprofil 9 verwendet. Daher ergibt sich alle 60 Winkelgrade eine Übereinstimmung mit dem Gegenprofil 9'. Deshalb muss die Getriebeübersetzung des mechanischen Getriebes 24 so gewählt werden, dass sich die Wiederholung von zwei Einrastpositionen der Formschlussprofile 9, 10 in die Gegenprofile 9', 10' erst nach einer großen Zahl von Umdrehungen wieder einstellt. Die nachfolgende Gleichung beschreibt die Anzahl der Umdrehungen, nach denen ein wiederholtes Einrasten möglich ist. Durch eine nicht geradzahlige Übersetzung i lässt sich der Winkel, bei dem es zur wiederholten Übereinstimmung beider Formschlussprofile 9, 10 mit ihren Gegenprofilen 9', 10' kommt, so vergrößern, wie es die Fehlertoleranz aufgrund elastischer Verformungen und das Getriebespiel zulässt, wodurch es auch zum Einrasten trotz einiger Grad Winkelunterschied kommen könnte.

$$\frac{\varphi_{an}}{i}\frac{1}{\Phi_{ab}} \in Z \wedge \frac{\varphi_{an}}{\Phi_{an}} \in Z$$

mit

$\varphi_{an}$ : Verdrehwinkel Rotor bzw. Getriebeeingangswelle
$\Phi_{an}$ : Rastenrvinkel Antriebsseite
$\Phi_{ab}$ : Rasterwinkel Abtriebsseite
$i$ : Getriebeübersetzung
$\in Z$ : ganzzahlig

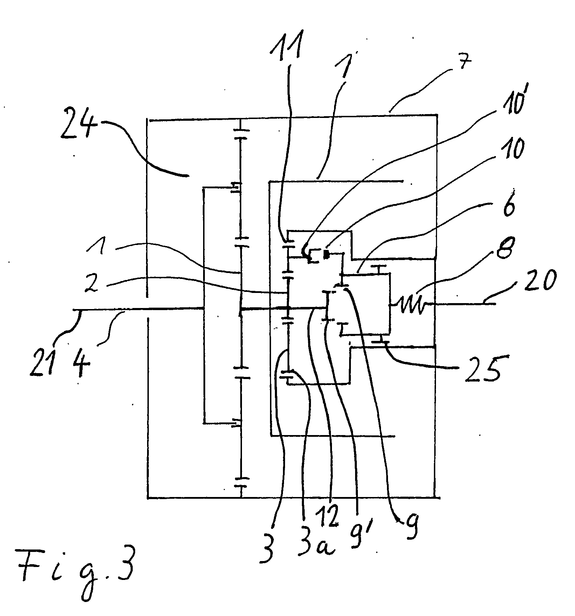

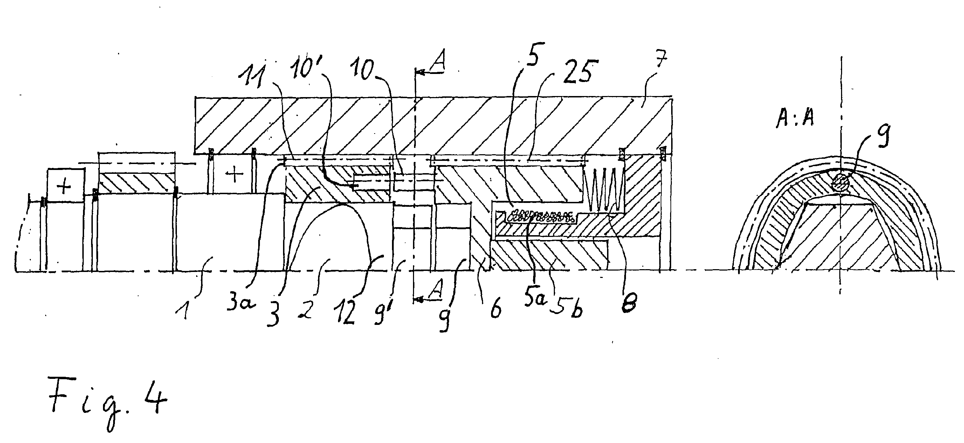

In den Figuren 3 und 4 wird zur Festlegung der Einrastposition anstatt eines Formschlussprofils mit entsprechendem Gegenprofil ein Harmonic-Drive-Getriebe eingesetzt, ansonsten sind die Bezugszeichen für gleiche Teile entsprechend des Ausführungsbeispiels der Figuren 1 und 2 gewählt.

Die Getriebeeingangswelle, also der Rotor 1, besitzt einen elliptischen Abschnitt 2, auf dem eine flexibler Zahnring 3 umläuft, das heißt gleitet und dabei analog zur elliptischen Wellenform verformt wird. Dieser Zahnring 3 hat eine Außenverzahnung 3a, die in die Innenverzahnung 11, das Hohlrad, des feststehenden Gehäuses 7 greift. Das Wirkprinzip dieser Zahnpaarung basiert auf dem Harmonic-Drive-Prinzip, wo durch eine geringe Zahndifferenz eine große Übersetzung zwischen Getriebeeingangswelle und Zahnring 3 entsteht. Der Zahnring 3 weist nun als Gegenprofil 10' eine Bohrung auf, in die die Blockiereinrichtung mit ihrem Formschlussprofil 10 an einer definierten Postion eingreifen kann. Der Blockierbolzen 6 wird im Betriebszustand von einem bestromten Elektromagneten 5 (Figur 4) bestehend aus Spule 5a und Tauchanker 5b entgegen der Rückstellkraft der Feder 8 zurückgehalten. Erst bei einem Ausfall der Wankregelung wird der Blockierbolzen 6 mit den Formschlussprofil 10 gegen den Zahnring 3 gedrückt und kann bei der durch das Gegenprofil 10' definierten Position durch Verschieben in die Festlegeposition eingreifen. In diesem Fall greift gleichzeitig das Drehmoment übertragende Formschlussprofil 9 des Blockierbolzens 6 in sein rotorfestes Gegenprofil 9' am Zahnring 3 ein und bildet die in Umfangsrichtung blockierend wirkende formschlüssige Verbindung zwischen dem Getriebeeingangswellenende 12 und dem Blockierbolzen 6, also zwischen Gehäuse 7 und Rotor 1. Das Drehmoment zum Blockieren der Getriebeeingangswelle, also des Rotors 1, wird über eine Keilverzahnung 25, in der sich der Blockierbolzen 6 axial verschieben lässt, an das Gehäuse 7 übertragen. Durch die hohe Übersetzung der Harmonic-Drive-Getriebeeinheit lässt sich so über einen großen Winkelbereich eine Blockierung des Getriebes 24 in einer gewünschten Position erreichen.

**Patentansprüche**

1. Geteilter Kraftfahrzeugstabilisator zur Wankregelung, mit einem eingebauten elektromechanischen Aktuator (23) zum Verspannen zweier Stabilisatorteile (20, 21) gegeneinander, der mindestens aus einem Elektromotor, aus einem Getriebe (24) und aus einer Blockiereinrichtung besteht, über die ein Gehäuse (7) des Aktuators (23) an einem Rotor (1) des Elektromotors festlegbar ist, wobei das Gehäuse (7) mit dem einen Stabilisatorteil (20) und eine Getriebeausgangswelle (4) mit dem anderen Stabilisatorteil (21) zur Drehmomentübertragung verbunden sind und die Blockiereinrichtung aus einem in Axialrichtung verschiebbaren Blockierbolzen (6) besteht, **dadurch gekennzeichnet, dass** das Gehäuse (7) und der Rotor (1) nur in einer einzigen Position zueinander, der Festlegeposition, nach der Auslösung der Blockiereinrichtung festgelegt werden, und dass die Festlegeposition die Grundstellung der beiden Stabilisatorteile (20, 21) ist, in der diese nicht gegeneinander vorgespannt sind, wozu der Blockierbolzen in Umfangsrichtung gehäuse- bzw. rotoroder getriebeausgangswellenfest angebracht ist und mindestens ein Formschlussprofil (9) besitzt, das durch das Verschieben des Blockierbolzens (6) in die Festlegeposition mit einem rotor- oder getriebeausgangswellen- bzw. gehäusefesten Gegenprofil (9') eine in Umfangsrichtung blockierend wirkende formschlüssige Verbindung bildet.

2. Geteilter Kraftfahrzeugstabilisator nach Anspruch 1, **dadurch gekennzeichnet, dass** die Blockiereinrichtung einen Elektromagneten (5) umfasst, der den Blokkierbolzen (6) gegen die Vorspannkraft einer Feder (8) in nicht blockierender Position oder in Festlegeposition hält.

**3.** Geteilter Kraftfahrzeugstabilisator nach einem der Ansprüche 1 oder 2, **dadurch gekennzeichnet, dass** der Blockierbolzen (6) mindestens drei Formschlussprofile (10, 9, 25) aufweist, ein erstes, dessen Gegenprofil (10') an der Getriebeausgangswelle (4) ausgebildet ist, ein zweites, dessen Gegenprofil (9') am Rotor (1) ausgebildet ist und ein drittes, dessen Gegenprofil (25) am Gehäuse (7) ausgebildet ist.

**4.** Geteilter Kraftfahrzeugstabilisator nach einem der Ansprüche 1 oder 2, **dadurch gekennzeichnet, dass** der Blockierbolzen (6) mindestens drei Formschlussprofile (10, 9, 25) aufweist, ein erstes, dessen Gegenprofil (10') in einem Zahnring (3) eines Harmonic-Drive-Getriebes ausgebildet ist, ein zweites, dessen Gegenprofil (9') am Rotor (1) ausgebildet ist und ein drittes, dessen Gegenprofil (25) am Gehäuse (7) ausgebildet ist.

**5.** Geteilter Kraftfahrzeugstabilisator nach einem der Ansprüche 1 bis 4 **dadurch gekennzeichnet, dass** eines der drei Formschlussprofile (25), insbesondere eine Keilverzahnung (25), mit seinem Gegenprofil (25) zur Festlegung des Blockierbolzens (6) in Umfangsrichtung und seiner axialen Führung immer in Eingriff ist.

**6.** Geteilter Kraftfahrzeugstabilisator nach einem der Ansprüche 1 bis 5, **dadurch gekennzeichnet, dass** die beiden anderen Formschlussprofile (10, 9) mit ihrem Gegenprofil (10', 9') nur dann in Eingriff sind, wenn die Blokkiereinrichtung die beiden Stabilisatorteile (20, 21) in der Festlegeposition festlegt.

**Claims**

**1.** A split motor vehicle stabiliser for roll control, comprising a built-in electromechanical actuator (23) for bracing two stabiliser parts (20, 21) against one another, consisting at least of an electric motor, a gear unit (24), and a blocking device, by means of which a housing (7) of the actuator (23) can be fixed to a rotor (1) of the electric motor, wherein the housing (7) is connected to one stabiliser part (20) and a gear unit output shaft (4) is connected to the other stabiliser part (21) for torque transmission and the blocking device comprises a blocking bolt (6) which can be displaced in the axial direction, **characterised in that** the housing (7) and the rotor (1) are only fixed in a single position in relation to one another, the fixing position, after the blocking device has been activated, and **in that** the fixing position is the basic position of the two stabiliser parts (20, 21), in which these are not braced against one another, for which purpose the blocking bolt is fixed to the housing or rotor or gear unit output shaft in the peripheral direction and has at least one positive fit profile (9), which, by displacing the blocking bolt (6) into the fixing position with a counter-profile (9') fixed to a rotor or gear unit output shaft or housing, forms a positive connection having a blocking action in the peripheral direction.

**2.** A split motor vehicle stabiliser according to claim 1, **characterised in that** the blocking device comprises an electromagnet (5), which holds the blocking bolt (6) against the pretensioning force of a spring (8) in the non-blocking position or in the fixing position.

**3.** A split motor vehicle stabiliser according to either of claims 1 or 2, **characterised in that** the blocking bolt (6) has at least three positive fit profiles (10, 9, 25), a first, the counter-profile (10') of which is formed on the gear unit output shaft (4), a second, the counter-profile (9') of which is formed on the rotor (1) and a third, the counter-profile (25) of which is formed on the housing (7).

**4.** A split motor vehicle stabiliser according to either of claims 1 or 2, **characterised in that** the blocking bolt (6) has at least three positive fit profiles (10, 9, 25), a first, the counter-profile (10') of which is formed in a toothed ring (3) of a harmonic drive gear unit, a second, the counter-profile (9') of which is formed on the rotor (1) and a third, the counter-profile (25) of which is formed on the housing (7).

**5.** A split motor vehicle stabiliser according to any one of claims 1 to 4, **characterised in that** one of the three positive fit profiles (25), more especially a wedge tooth system (25), is always in engagement with its counter-profile (25) to fix the blocking bolt (6) in the peripheral direction and for the axial guidance thereof.

**6.** A split motor vehicle stabiliser according to any one of claims 1 to 5, **characterised in that** the two other positive fit profiles (10, 9) are only in engagement with their counter-profile (10', 9') when the blocking device fixes the two stabiliser parts (20, 21) in the fixing position.

**Revendications**

**1.** Stabilisateur divisé de véhicule pour la régulation antiroulis comprenant un actionneur électromécanique (23) intégré pour serrer deux parties de stabilisateur (20, 21) l'une contre l'autre, cet actionneur se composant d'au moins un moteur électrique, d'une transmission (24) et d'une installation de blocage qui fixent un boîtier (7) de l'actionneur (23) au rotor (1) du moteur électrique,
le boîtier (7) avec une partie de stabilisateur (20) et un arbre de sortie de transmission (4) étant reliés à l'autre partie de stabilisateur (21) pour la transmission du couple et l'installation de blocage se compose d'un goujon de blocage (6) coulissant dans la direction axiale,
**caractérisé en ce que**
le boîtier (7) et le rotor (1) ne peuvent être fixés que dans une position l'une par rapport à l'autre, à savoir la position de fixation après le déclenchement de l'installation de blocage et

la position de fixation est la position de base des deux parties de stabilisateur (20, 21) dans laquelle ces deux parties ne sont pas précontraintes l'une contre l'autre, et pour cela le goujon de blocage est installé dans la direction périphérique, de façon solidaire au boîtier ou au rotor ou à l'arbre de sortie de transmission et il possède au moins un profil (9) de liaison par la forme qui, par coulissement du goujon de blocage (6) dans la position de fixation, réalise une liaison par la forme à effet de blocage dans la direction périphérique avec un contre-profil (9') solidaire du rotor ou de l'arbre de sortie de transmission du boîtier.

2. Stabilisateur divisé de véhicule selon la revendication 1,
**caractérisé en ce que**
l'installation de blocage comprend un électro-aimant (5) qui maintient le goujon de blocage (6) contre la force de précontrainte d'un ressort (8) dans une position de non blocage ou une position de fixation.

3. Stabilisateur divisé de véhicule selon l'une des revendications 1 ou 2,
**caractérisé en ce que**
le goujon de blocage (6) comporte au moins trois profils de liaison par la forme (10, 9, 25), à savoir un premier profil dont le contre-profil (10') est réalisé sur l'arbre de sortie de transmission (4), un second profil dont le contre-profil est réalisé sur le rotor (1) et un troisième profil dont le contre-profil (25) est réalisé sur le boîtier (7).

4. Stabilisateur divisé de véhicule selon l'une des revendications 1 ou 2,
**caractérisé en ce que**
le goujon de blocage (6) comporte au moins trois profils de liaison par la forme (10, 9, 25), à savoir un premier profil dont le contre-profil (10') est réalisé dans une couronne dentée (3) d'une transmission « harmonic drive », un second profil dont le contre-profil (9') est réalisé sur le rotor (1) et un troisième profil dont le contre-profil (25) est réalisé sur le boîtier (7).

5. Stabilisateur divisé de véhicule selon l'une des revendications 1 à 4,
**caractérisé en ce que**

l'un des trois profils de liaison par la forme (25), notamment une denture conique (25), est toujours en prise avec son propre profil (25) pour fixer le goujon de blocage (6) dans la direction périphérique et assurer son guidage axial.

6. Stabilisateur divisé de véhicule selon l'une des revendications 1 à 5,
**caractérisé en ce que**
les deux autres profils de liaison par la forme (10, 9) sont en prise avec leur contre-profil (10', 9') seulement si l'installation de blocage fixe les deux parties de stabilisateur (20, 21) dans une position de fixation.

Fig. 1

EP 1 879 758 B1

24

23

A:A

1

4

7  25  6  5  8

9

g'  10'  10  g

5a  5b

10

Fig. 2

Fig. 3

Fig. 4

EP 1 879 758 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19846275 A1
- WO 2004010555 A2
- WO 2004037573 A1